# EUROPÄISCHE PATENTSCHRIFT

(11) **EP 2 639 361 B1**
(45) Veröffentlichungstag und Bekanntmachung des Hinweises auf die Patenterteilung: **18.04.2018**
(21) Anmeldenummer: 13156559.0
(22) Anmeldetag: 25.02.2013
(51) Int. Cl.: B62D 33/06, E02F 9/16

(54) **Kabinenschutz**
Cabin protection
Protection de cabine

(30) Priorität: 12.03.2012 DE 102012102077; 14.03.2012 DE 102012102140
(43) Veröffentlichungstag der Anmeldung: 18.09.2013
(73) Patentinhaber: Echle Hartstahl GmbH, 77709 Wolfach (DE)
(72) Erfinder: Echle, Lothar, 77709 Wolfach (DE)
(74) Vertreter: Patentanwälte und Rechtsanwalt Weiß, Arat & Partner mbB

(56) Entgegenhaltungen:
- DE-A1- 4 404 415
- GB-A- 2 430 696
- JP-A- H08 100 442
- JP-A- H08 302 743
- JP-A- 2003 232 053
- JP-A- 2004 074 853
- JP-U- S6 091 649

## Beschreibung

### TECHNISCHES GEBIET

Die Erfindung betrifft einen Kabinenschutz nach dem Oberbegriff des Anspruchs 1.

### STAND DER TECHNIK

Zum Schutz vor herabfallenden Gegenständen bei Bagger- und Abbrucharbeiten wird ein Kabinenschutz verwendet. Nachteiligerweise hat der Baggerfahrer dadurch eine schlechtere Sicht als ohne Kabinenschutz. Dies ist besonders bei Arbeiten, bei denen kein Kabinenschutz vorgeschrieben ist sehr nachteilig.

In diesem Zusammenhang wird auf verschiedene aus dem Stand der Technik bekannte Kabinenschutzeinrichtungen verwiesen. Hier wird beispielsweise auf die JP 2003 232 053 A verwiesen, welche einen Kabinenschutz offenbart, welcher bei Bedarf von der Decke der Kabine vor die Frontscheibe gezogen werden kann.

Weiter wird auf die JP H 08 100 442 A verwiesen. Dort ist unter anderem einen Kabinenschutz beschrieben, welcher per Antrieb betätigt werden kann. Daneben wird auf die JP S 60 916 49 U verwiesen, welche einen statischen Kabinenschutz offenbart.

Ausserdem wird auf die DE 44 04 415 A1 verwiesen, welche einen Kabinenschutz offenbart. Dort wird ein Teil des Kabinenschutzes per hydraulischer Halteelemente in einer definierten Position gehalten.
Die GB 2 430 696 A und die JP 2004 074 853 A offenbaren weitere nach dem Stand der Technik bekannte Kabinenschutzeinrichtungen,

### BESCHREIBUNG DER ERFINDUNG

Aufgabe der Erfindung ist es, einen Kabinenschutz für einen Bagger zu verbessern, wobei insbesondere eine größere Flexibilität in der Nutzung der Bagger erreicht werden soll.

Zur Lösung der Aufgabe führen die Merkmale des Anspruchs 1.

In typischen Ausführungsbeispielen umfasst ein Kabinenschutz für einen Bagger ein Frontschutzgitter und ein Kabinenschutzdach. Vorzugsweise kann das Frontschutzgitter zumindest teilweise in das Kabinenschutzdach eingeschoben werden. Dadurch ergibt sich der Vorteil, dass das Frontschutzgitter für Arbeiten, bei denen es nicht benötigt wird, entfernt werden kann und der Fahrer eine bessere Sicht hat. Besonders vorteilhaft ist, dass nicht der vollständige Kabinenschutz entfernt werden muss und das Frontschutzgitter bei Bedarf auf einfache Art und Weise wieder als Schutz positioniert werden kann.

Vorzugsweise umfasst das Frontschutzgitter ein Oberteil und ein Unterteil. Besonders bevorzugt kann nur das Oberteil des Frontschutzgitters in das Kabinenschutzdach eingeschoben werden. Dadurch ergibt sich der Vorteil, dass die Länge des Kabinenschutzdaches ausreicht zur Aufnahme des Oberteils. Dadurch kann der Kabinenschutz eine sehr geringe Bauhöhe aufweisen. Dies ist vorteilhaft, weil der Bagger beim Transport eine gewisse Gesamthöhe nicht überschreiten darf. Der erfindungsgemäße Kabinenschutz muss zum Transport nicht demontiert werden. Ein weiterer Vorteil ist, dass ein unterer Bereich der Kabine und das Dach der Kabine, die immer von dem unteren Teil und dem Kabinenschutzdach bedeckt sind, weiter geschützt bleiben.

Der erfindungsgemässe Kabinenschutz ist auch einfach zu transportieren, sodass gerade bei einem nachträglichen Anbringen des Kabinenschutzes an einem Bagger kein Antransport des Baggers zum Anbau des Kabinenschutzes durchgeführt werden muss, sondern der Kabinenschutz aufgrund der geringen Bauhöhe kostengünstig versandt transportiert werden kann, um den Kabinenschutz vor Ort bei dem Bagger anzubringen.

Vorzugsweise ist das Oberteil im Sichtbereich eines Fahrers angeordnet.

In typischen Ausführungsbeispielen umfasst das Kabinenschutzdach eine Führung. Vorzugsweise ist die Führung geeignet, zum Führen des Oberteils des Frontschutzgitters. Besonders bevorzugt ist die Führung in einer Seitenwand des Kabinenschutzdachs angeordnet. Dadurch ergibt sich der Vorteil, dass für den Kabinenschutz eine sehr geringe Bauhöhe erreicht wird. Dies ist besonders vorteilhaft, da eine gewisse Transporthöhe nicht überschritten werden darf. Vorzugsweise sind die Führungen so ausgebildet, um ein leichtgängiges, vibrationsfreies und spielfreies Öffnen und Schließen des Oberteils des Frontschutzgitter zu gewährleisten.

In typischen Ausführungsbeispielen umfasst das Oberteil des Frontschutzgitters eine Mehrzahl von Profilrollen, die geeignet sind mit der Führung in den Kabinenschutzdach zusammenzuwirken. Die Profilrollen können wir hierbei aus unterschiedlichsten Materialien hergestellt werden. Dadurch ergibt sich der Vorteil, dass das Oberteil des Frontschutzgitter in das Kabinenschutzdach eingeschoben werden kann. Im typischen Ausführungsbeispielen sind entweder die Profilrollen und/oder das Führungselemente mit einem elastischen Material, vorzugsweise Gummi belegt. Dadurch ergibt der Vorteil, dass Vibrationen oder Erschütterungen nicht zum Klappern des Oberteils in der Führung führen.

Vorzugsweise werden als Profilrollen speziell einstellbare Kunststoffprofilrollen verwendet. Dadurch ergibt der Vorteil, dass ein laufruhiger und sicherer Lauf beim Öffnen und Schließen des Oberteils erreicht wird.

In typischen Ausführungsbeispielen umfasst der Kabinenschutz ein Verbindungselement. Vorzugsweise ist das Verbindungselement geeignet, das Oberteil des Frontschutzgitters zu dem Unterteil des Frontschutzgitters zu arretieren. Dadurch ergibt sich der Vorteil, dass das Oberteil des Frontschutzgitters und das Unterteil des Frontschutzgitters verbunden werden können. Im typischen Ausführungsbeispiel ist das Verbindungselement als Schnellspannverschluss ausgebildet. Dadurch ergibt sich der Vorteil, dass das Verbindungselement sehr einfach herstellbar ist und die Verbindung zwischen dem Oberteil des Frontschutzgitters mit dem Unterteil des Frontschutzgitters schnell und einfach gelöst und angezogen werden kann.

Vorzugsweise ist an jeder Seite des Frontschutzgitters ein Spannverschluss angeordnet. Dadurch ergibt sich der Vorteil, dass das Frontschutzgitter von zwei Seiten gehalten werden kann.

In typischen Ausführungsbeispielen umfasst der Kabinenschutz ein Zentrierungselement. Dadurch ergibt sich der Vorteil, dass das Oberteil und das Unterteil zueinander ausgerichtet werden können. Vorzugsweise ist das Zentrierungselement geeignet das Oberteil des Frontschutzgitters zu dem Unterteil des Frontschutzgitters auszurichten. Vorzugsweise umfasst das Zentrierungselement einen konischen Zapfen. Dadurch ergibt sich der Vorteil, dass das Zentrierungselement auf einfache Art und Weise ausgebildet werden kann.

In typischen Ausführungsbeispielen umfasst der Kabinenschutz in einer oberen Position zu arretieren. Dadurch ergibt sich der Vorteil, dass das Oberteil des Kabinenschutzes sicher in einer oberen Position gehalten werden kann. Vorzugsweise umfasst die Arretiereinrichtung einen Rastierbolzen. Vorzugsweise ist der Rastierbolzen federnd gelagert. Vorzugsweise ist der Rastierbolzen geeignet in eine Bohrung in einem unteren Bereich des Oberteils einzugreifen.

Vorzugsweise umfasst das Frontschutzgitter zumindest eine Querstrebe. Vorzugsweise ist die Querstrebe geeignet mit einer Mehrzahl von Längsstangen ein Gitter auszubilden, dass den Fahrer und die Kabine schützt.

In typischen Ausführungsbeispielen ist die zumindest eine Querstrebe in einem Winkel angeordnet, der einer Blickrichtung des Fahrers entspricht Dadurch ergibt sich der Vorteil, dass ein Sichtbereich des Fahrers möglichst wenig durch die Querstrebe verdeckt wird. Bei dem Vorsehen von einer Mehrzahl von Querstreben ergibt sich dadurch, dass diese in unterschiedlichen Winkeln angeordnet sind. Der Winkel ergibt sich in Abhängigkeit davon, wie der Blick des Fahrers in der Höhe der Querstrebe auf die Querstrebe trifft.

In typischen Ausführungsbeispielen umfasst der Kabinenschutz einen Antrieb, geeignet zum Einfahren und Ausschieben des Oberteils. Vorzugsweise ist der Antrieb mechanisch, elektrisch, hydraulisch oder pneumatisch betrieben. Alternativ kann der das Oberteil auch mechanisch von Hand eingeben schoben und ausgezogen werden.

In typischen Ausführungsbeispielen umfasst das Kabinenschutzdach einen Überstand, geeignet zur Montage von Scheinwerfern. Dadurch ergibt sich der Vorteil, dass die Scheinwerfer vor den Schlägen von herabfallenden Gegenständen geschützt sind.

Im typischen Ausführungsbeispiel ist das Frontschutzgitter und das Kabinenschutzdach an die Kabinenform angepasst. Das bedeutet, dass sie kongruente Formen zu einer Außenwand der Kabine aufweisen. Dadurch ergibt sich der Vorteil, dass ein idealer Schutz erreicht wird und eine minimale Bauhöhe und Baugröße benötigt wird.

### KURZE BESCHREIBUNG DER FIGUREN

Nachfolgend wird die Erfindung anhand der beiliegenden Zeichnung kurz beschrieben, wobei deren einzelne Figuren zeigen:
- Figur 1: eine schematische Darstellung einer geschnittenen Seitenansicht einer Kabine eines Baggers mit einem Kabinenschutz, wobei ein Frontschutzgitter des Kabinenschutzes in unterschiedlichen Positionen dargestellt ist;
- Figur 2: ein schematische Darstellung einer Vorderansicht einer Kabine eines Baggers mit einem geschlossenen Kabinenschutz;
- Figur 3: eine schematische Darstellung einer geschnittenen Seitenansicht einer Kabine eines Baggers mit einem Kabinenschutz, wobei ein Frontschutzgitter des Kabinenschutzes geöffnet ist;
- Figur 4: ein schematische Darstellung einer Vorderansicht einer Kabine eines Baggers mit einem geöffneten Kabinenschutz;
- Figur 5: eine schematische Darstellung einer geschnittenen Seitenansicht einer Kabine eines Baggers mit einem Kabinenschutz, wobei ein Frontschutzgitter des Kabinenschutzes geschlossen ist;
- Figur 6: eine schematische Darstellung eines vergrösserten Ausschnitts der Figur 5;
- Figur 7: eine schematische Darstellung eines vergrösserten Ausschnitts der Figur 4.

### AUSFÜHRUNGSBEISPIEL

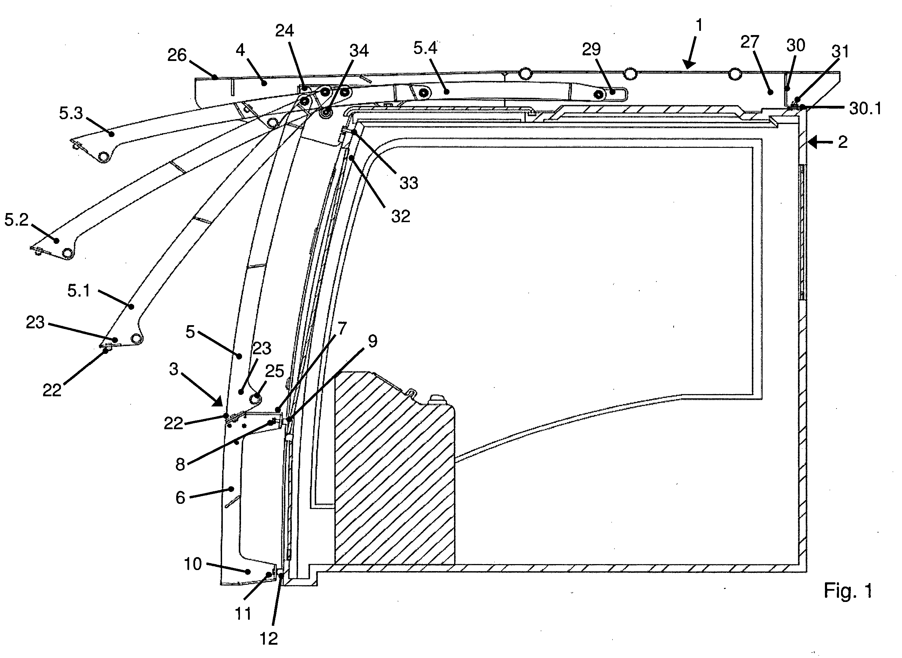

Figur 1 zeigt einen Kabinenschutz 1 für einen Bagger beziehungsweise eine Kabine 2 eines Baggers. Der Kabinenschutz 1 umfasst ein Frontschutzgitter 3 und ein Kabinenschutzdach 4.

Das Frontschutzgitter 3 umfasst ein Oberteil 5 und ein Unterteil 6. Das Unterteil 6 ist von der Seite aus gesehen in Form eines C-Profils ausgebildet. Das Unterteil 6 ist so an der Kabine 2 befestigt, dass seine offene Seite zu der Kabine 2 hinweist.

An seinem Oberflansch 7 ist das Unterteil 6 mit einer Schraubverbindung 8 an einer Außenhaut der Kabine 2 befestigt. Zwischen dem Unterteil 6 und der Außenhaut der Kabine 2 ist ein Abstandhalter 9 angeordnet. Vorzugsweise ist der Abstandhalter 9 eine Hülse.

Das Unterteil 6 ist mit seinem Unterflansch 10 über eine weitere Schraubverbindung 11 mit der Außenhaut der Kabine 2 verbunden.

In typischen Ausführungsbeispielen können die Schraubverbindungen 8 und 11 auch als Nietverbindungen, Klemmverbindungen und/oder Steckverbindungen ausgebildet sein.

Zwischen dem Unterflansch 10 und der Außenhaut der Kabine 2 ist ein Abstandhalter 12 eingebracht. Vorzugsweise wird als Abstandhalter 12 eine Hülse verwendet. Noch bevorzugter sind die Abstandshalter 9 und/oder 12 aus einem elastischen Material, vorzugsweise Gummi ausgebildet, um Vibrationen, Schwingungen und/oder Klappern zu vermeiden.

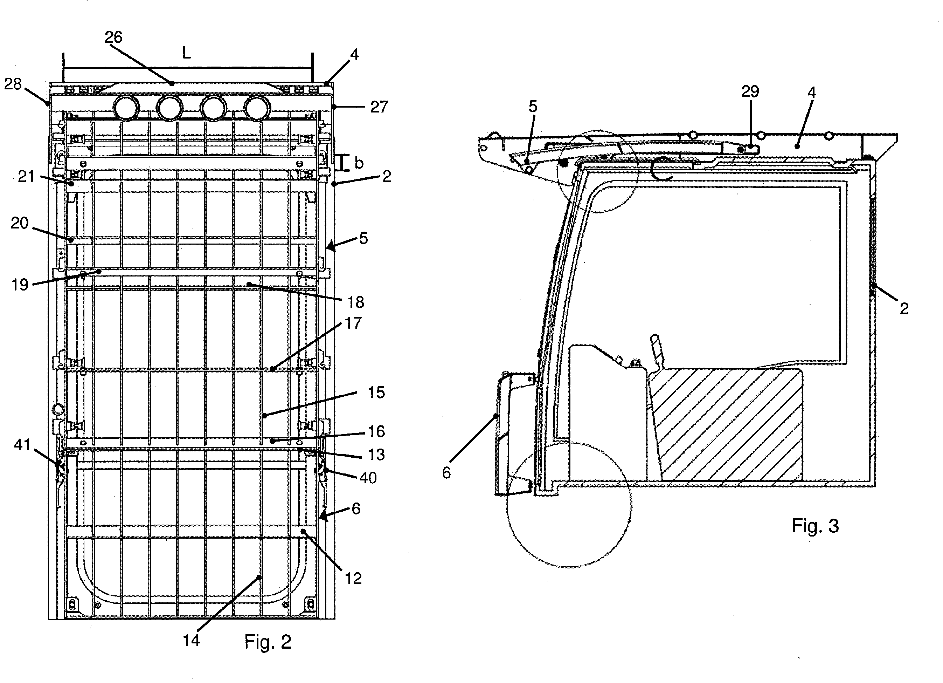

Wie in Figur 2 gezeigt, umfasst das Unterteil 6 des Frontschutzgitter 3 eine Mehrzahl von Querstreben 12 und 13 und eine Mehrzahl von Längsstangen 14.

Auch das Oberteil 5 umfasst eine Mehrzahl von Längsstangen 15 und eine Mehrzahl von Querstreben 16, 17,18, 19, 20 und 21.
Alle Längsstangen 14 und 15 weisen einen kreisförmigen Querschnitt auf.
Die Querstreben 12, 13,16, 17,18, 19, 20 und 21 weisen eine Breite b und eine Länge I auf. Die Länge I entspricht im wesentlichen einer Breite einer Kabine 2. Die Breite b beträgt zwischen 5 mm und 100 mm, vorzugsweise zwischen 20 mm und 50 mm.
Die Querstreben 12, 13, 16, 17, 18, 19, 20 und 21 schließen mit den Längsstangen 15 jeweils einen Winkel ein, der so gewählt ist, dass jede Querstrebe 12, 13, 16, 17, 18, 19, 20 und 21 in einer Blickrichtung eines Fahrers liegt. Dadurch ergibt sich der Vorteil, dass sie Querstreben 12, 13, 16, 17, 18, 19, 20 und 21 mit ihrer Breite b nur einen geringen Teil des Sichtbereichs eines Fahrer abdecken. Diese Anordnung führt dazu, dass Querstreben 12, 13, 16, 17, 18, 19, 20 und 21 in unterschiedlichen Winkeln ausgerichtet sind.
Wie in Figur 1 gezeigt, umfasst das Oberteil 5 des Frontschutzgitter 3 einen Bolzen 22 an seinem unterem Ende 23. Das Oberteil 5 ist in geschlossener Stellung dargestellt.
Das Oberteil 5.1, 5.2, 5.3, und 5.4 in weiteren Positionen bzw. beim Einschieben in das Kabinenschutzdaches 4 dargestellt. Das Oberteil 5.4 ist in der eingeschobenen Position gezeichnet.

Das Kabinenschutzdach 3 umfasst eine Oberseite 26 und zwei Seitenwände 27, 28, wobei in Figur 1 nur die weiter hinten liegende Seitenwand 27 erkennbar ist.

An einem dem unteren Ende 23 gegenüber liegenden Ende umfasst das Oberteil 5 als Führungselement eine Profilrolle 24.

Ferner umfasst das Oberteil 5 an seinem unteren Ende 23 eine Einrastbohrung 26.

In Figur 2 ist auch die zweite Seitenwand 28 erkennbar. Die beiden Seitenwände 28 und 27 sind im Wesentlichen analog ausgebildet.

Im folgenden wird aus Gründen der Übersichtlichkeit nur die Seitenwand 27 beschrieben.

Das Kabinenschutzdach 4 umfasst eine Führung 29. Im vorliegenden Ausführungsbeispiel ist die Führung 29 als eine im Wesentlichen rechteckige Öffnung in der Seitenwand 26 bzw. 27 ausgebildet. Die Führung 29 ist geeignet zum Führen der Profilrolle 24. Das Kabinenschutzdach 4 umfasst einen Steg 30 der im wesentlichen senkrecht von der Oberseite 26 abragt. Der Steg 30 umfasst einen Flansch 30.1. Der Flansch 30.1 ist über eine Schraubverbindung 31 mit der Außenhaut der Kabine 2 verbunden.

Ferner ist das Kabinenschutzdach 4 in einem vorderen Bereich, nahe einer Scheibe 32 der Kabine 2 über eine weitere Schraubverbindung 33 mit der Kabine 2 verbunden.

Das Kabinenschutzdach 4 umfasst einen Rastbolzen 34. Der Rastbolzen 34 ist an der Seitenwand 27 angebracht. Vorzugsweise ist ein weiterer, nicht dargestellter Rastbolzen analog an der Seitenwand 28 angeordnet. Der Rastbolzen 34 ist so angeordnet, dass er, wenn das Oberteil 5 in das Kabinenschutzdach 4 geschoben wird, in die Einrastöffnung 25 greift und das Oberteil 5 sicher in einer oberen Position fixiert. Vorzugsweise ist der Rastbolzen 34 dazu federnd gelagert.

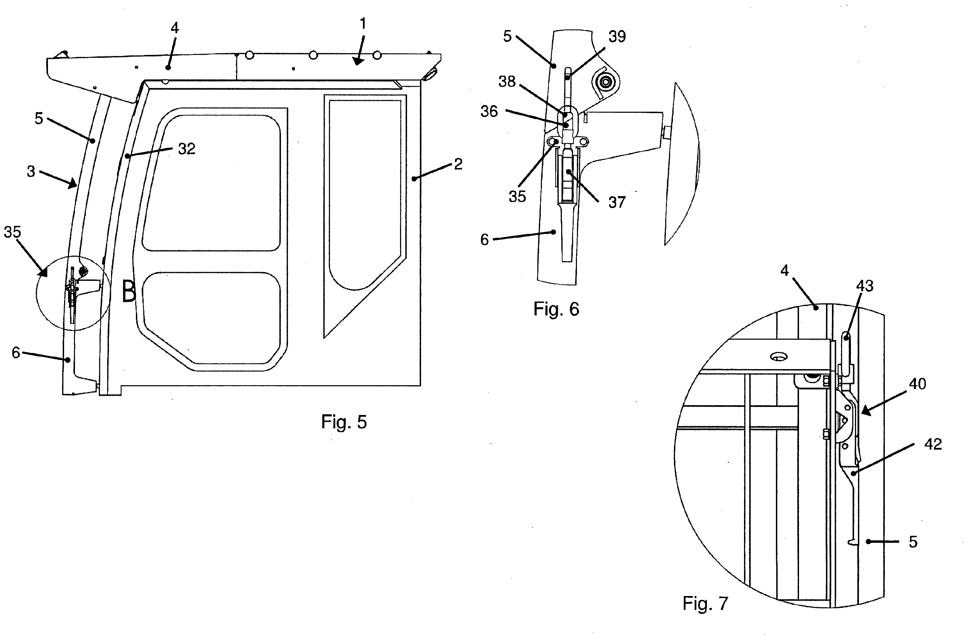

Ferner umfasst der Kabinenschutz 1, wie in den Figuren 5 und 6 dargestellt, eine Zentriereinrichtung 35. Die Zentriereinrichtung 35 dient dazu, das Oberteil 5 korrekt zum Unterteil 6 auszurichten, wenn diese miteinander verbunden werden.

Im vorliegenden Ausführungsbeispiel umfasst das Unterteil 6 dazu einen Stift 36. Der Stift 36 ist vorzugsweise über eine Lagerung 37 in dem Unterteil 6 aufgenommen. Vorzugsweise umfasst die Lagerung 37 ein Federelement, sodass der Stift 36 eine gewisse Beweglichkeit erhält.

Als weiterer Teil der Zentriereinrichtung 35 ist im Oberteil 5 ein konischer Stift 38 angeordnet. Der konische Stift 38 ist über eine Lagerung 39 in dem Oberteil 5 befestigt.

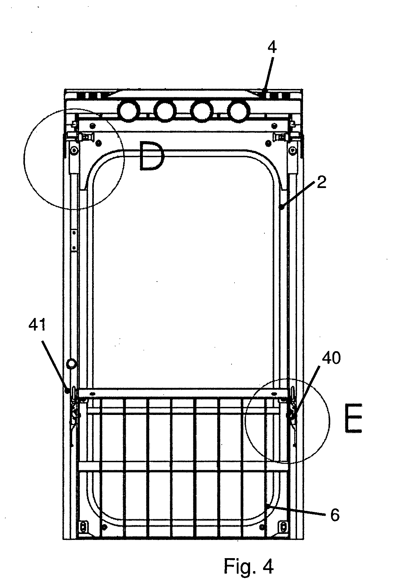

Der Kabinenschutz 1 umfasst zum Verbinden des Oberteils 5 mit dem Unterteil 6 zwei Verbindungselemente 40 und 41 wie in den Figuren 2 und 4 gezeigt. Die Verbindungselemente 40 und 41 sind im wesentlichen analog ausgebildet. Deshalb wird im Folgenden nur das Verbindungselement 41 näher beschrieben.

Figur 7 zeigt eine vergrößerte Darstellung des Verbindungselements 40. Das Verbindungselement 40 ist vorzugsweise als Schnellspannverschluss ausgebildet. Vorzugsweise ist ein Hebel 42 des Schnellspanverschlusses an dem Unterteil 5 angeordnet. Noch bevorzugter ist ein Haken 43 des Schnellspannverschlusses an dem Oberteil 4 angeordnet.

Die Funktionsweise der Erfindung ist folgende:

Figur 5 zeigt den Kabinenschutz 1 in einer Position mit geschlossenem Frontschutzgitter 3. Das Oberteil 5 des Frontschutzgitter 3 ist vor einer Scheibe 32 der Kabine 2 angeordnet.

Dadurch sind der Fahrer und die Scheibe, beispielsweise bei Abbrucharbeiten vor herunterfallenden Gegenständen geschützt. Auch das Kabinenschutzdach 4 und das Unterteil 6 erfüllen diese Schutzfunktion.

Wenn mit dem Bagger andere Arbeiten, beispielsweise Graben, ausgeführt werden, kann das Oberteil 5 des Frontschutzgitters 3, entweder von Hand, hydraulisch, pneumatisch, elektrisch oder mechanisch in das Kabinenschutzdach 4 eingeschoben werden.

Dazu werden die Verbindungselemente 40 und 41 geöffnet. Wie in Figur 1 gezeigt, wird das Oberteil 5 dann in die mit den Bezugszeichen 5.1, 5.2, 5.3 und 5.4 gekennzeichneten Positionen geschoben. Dabei laufen die Profilrollen 24 in der Führung 29.

Wenn der Rastbolzen 34 in die Einrastbohrung 25 des Oberteils 5 greift, ist das Oberteil sicher in dem Kabinenschutzdach 4 gehalten.

Zum Ausfahren des Oberteils 5 wird dieses entweder mit einem nichtdargestellten Antrieb aus dem Kabinenschutzdach 4 herausgeschoben oder von Hand aus dem Kabinenschutzdach 4 herausgezogen. Das Oberteil 5 wird dazu soweit herunter gezogen, dass die Querstrebe 16 des Oberteils 5 auf der Querstrebe 13 des Unterteils 6, wie in Figur 2 gezeigt, zum Liegen kommt. Die endgültige Zentrierung erfolgt über die Zentriereinrichtung 35, wie in den Figuren 5 und 6 gezeigt.

Zum Fixieren kann das Oberteil 5 über die Verbindungseinrichtungen 40 und 41 am Unterteil 6 fixiert werden.

**Bezugszeichenliste**

| | | | | | |
|---|---|---|---|---|---|
| 1 | Kabinenschutz | 34 | Rastbolzen | 67 | |
| 2 | Kabine | 35 | Zentriereinrichtung | 68 | |
| 3 | Frontschutzgitter | 36 | Stift | 69 | |
| 4 | Kabinenschutzdach | 37 | Lagerung | 70 | |
| 5 | Oberteil | 38 | Konischer Stift | 71 | |
| 6 | Unterteil | 39 | Lagerung | 72 | |
| 7 | Oberflansch | 40 | Verbindungselement | 73 | |
| 8 | Schraubverbindung | 41 | Verbindungselement | 74 | |
| 9 | Abstandshalter | 42 | Hebel | 75 | |
| 10 | Unterflansch | 43 | Haken | 76 | |
| 11 | Schraubverbindung | 44 | | 77 | |
| 12 | Querstrebe | 45 | | 78 | |
| 13 | Querstrebe | 46 | | 79 | |
| 14 | Längsstange | 47 | | | |
| 15 | Längsstange | 48 | | | |
| 16 | Querstrebe | 49 | | | |
| 17 | Querstrebe | 50 | | l | Länge |
| 18 | Querstrebe | 51 | | b | Breit |
| 19 | Querstrebe | 52 | | | |
| 20 | Querstrebe | 53 | | | |
| 21 | Querstrebe | 54 | | | |
| 22 | Bolzen | 55 | | | |
| 23 | Unteres Ende | 56 | | | |
| 24 | Profilrolle | 57 | | | |
| 25 | Einrastbohrung | 58 | | | |
| 26 | Oberseite | 59 | | | |
| 27 | Seitenwand | 60 | | | |
| 28 | Seitenwand | 61 | | | |
| 29 | Führung | 62 | | | |
| 30 | Steg | 63 | | | |
| 31 | Schraubverbindung | 64 | | | |
| 32 | Scheibe | 65 | | | |
| 33 | Schraubverbindung | 66 | | | |

## Patentansprüche

1. Kabinenschutz (1) für eine Kabine (2) eines Baggers, wobei die Kabine (2) eine Aussenhaut aufweist, umfassend
ein Frontschutzgitter (3) und
ein Kabinenschutzdach (4) in dem eine Führung (29) angeordnet ist, wobei das Frontschutzgitter (3) zumindest teilweise in das Kabinenschutzdach (4) eingeschoben werden kann, wobei das Frontschutzgitter (3) ein Oberteil (5) und ein Unterteil (6) umfasst, wobei das Unterteil (6) einen Oberflansch (7) aufweist, wobei das Unterteil eine erste Schraubverbindung (8) aufweist, so dass das Unterteil (6) an seinem Oberflansch (7) mit der ersten Schraubverbindung (8) an der Außenhaut der Kabine (2) befestigbar ist, wobei der Kabinenschutz einen ersten Abstandshalter (9) aufweist, der zwischen dem Unterteil (6) und der Außenhaut der Kabine (2) anordenbar ist und wobei das Unterteil (6) eine zweite Schraubverbindung (11) aufweist, so dass das Unterteil (6) ist-mit seinem Unterflansch (10) über die zweite Schraubverbindung (11) mit der Außenhaut der Kabine (2) befestigbar ist, wobei der Kabinenschutz einen zweiten Abstandshalter (12) aufweist, der zwischen dem Unterflansch (10) und der Außenhaut der Kabine (2) anordenbar ist, wobei die beiden Abstandshalter (9, 12) aus einem elastischen Material sind, wobei das Oberteil (5) des Frontschutzgitters (3) eine Mehrzahl von Profilrollen (24) umfasst, geeignet mit der Führung (29) in dem Kabinenschutzdach (4) zusammenzuwirken und wobei der Kabinenschutz zumindest ein Verbindungselement (40, 41) aufweist, das geeignet ist, das Oberteil (5) des Frontschutzgitters (3) zu dem Unterteil (6) des Frontschutzgitters (3) zu arretieren und wobei der Kabinenschutz ein Zentrierungselement (35) aufweist, das geeignet ist, das Oberteil (5) des Frontschutzgitters (3) zu dem Unterteil (6) des Frontschutzgitters (3) zu zentrieren, wobei das Zentrierungselement (35) einen Stift (36) aufweist, der über eine erste Lagerung (37) in dem Unterteil (6) aufgenommen ist, wobei die erste Lagerung (37) ein Federelement aufweist, und als weiterer Teil des Zentrierungselements im Oberteil (5) ein konischer Stift (38) angeordnet ist und der konische Stift (38) über eine zweite Lagerung (39) in dem Oberteil (5) befestigt ist, wobei der Kabinenschutz eine Arretiereinrichtung (25, 34) aufweist, die geeignet ist, das Oberteil (5) des Frontschutzgitters (3) in einer oberen Position zu arretieren und wobei das Frontschutzgitter (3) zumindest eine Querstrebe (12) aufweist, wobei die Querstrebe (12) in einem Winkel angeordnet ist, der einer Blickrichtung des Fahrers entspricht und wobei der Kabinenschutz einen Antrieb aufweist zum Einschieben und Ausschieben des Oberteils (5) des Frontschutzgitters (3).

## Claims

1. Cab protection (1) for a cab (2) of a digger, wherein the cab (2) has an outer skin, comprising
a front protective grille (3) and
a cab protection roof (4) in which a guide (29) is arranged,
wherein the front protective grille (3) can be pushed at least partially into the cab protection roof (4), wherein the front protective grille (3) comprises an upper part (5) and a lower part (6),
wherein the lower part (6) has an upper flange (7),
wherein the lower part has a first screw connection (8), so that the lower part (6) can be fastened at its upper flange (7) with the first screw connection (8) to the outer skin of the cab (2), wherein the cab protection has a first spacer (9) which can be arranged between the lower part (6) and the outer skin of the cab (2), and wherein the lower part (6) has a second screw connection (11), so that the lower part (6) can be fastened with its lower flange (10) by means of the second screw connection (11) to the outer skin of the cab (2), wherein the cab protection has a second spacer (12) which can be arranged between the lower flange (10) and the outer skin of the cab (2),
wherein the two spacers (9, 12) are made of an elastic material, wherein the upper part (5) of the front protective grille (3) comprises a plurality of profiled rollers (24), suitable for cooperating with the guide (29) in the cab protection roof (4), and wherein the cab protection has at least one connecting element (40, 41) which is suitable for locking the upper part (5) of the front protective grille (3) to the lower part (6) of the front protective grille (3), and wherein the cab protection has a centring element (35) which is suitable for centring the upper part (5) of the front protective grille (3) relative to the lower part (6) of the front protective grille (3), wherein the centring element (35) has a pin (36) which is received in the lower part (6) by means of a first bearing (37), wherein the first bearing (37) has a spring element, and as a further part of the centring element a conical pin (38) is arranged in the upper part (5) and the conical pin (38) is fastened in the upper part (5) by means of a second bearing (39), wherein the cab protection has a locking means (25, 34) which is suitable for locking the upper part (5) of the front protective grille (3) in an upper position and wherein the front protective grille (3) has at least one transverse strut (12), wherein the transverse strut (12) is arranged at an angle which corresponds to a viewing direction of the driver and wherein the cab protection has a drive for pushing the upper part (5) of the front protective grille (3) in and out.

## Revendications

1. Protection de cabine (1) pour une cabine (2) d'une excavatrice, dans laquelle la cabine (2) présente une peau extérieure, comportant
une grille de protection avant (3), et
un toit de protection de cabine (4) dans lequel est disposé un guide (29),
dans lequel la grille de protection avant (3) peut être poussée au moins partiellement dans le toit de protection de cabine (4), la grille de protection avant (3) comportant une partie supérieure (5) et une partie inférieure (6),
dans laquelle la partie inférieure (6) présente une bride supérieure (7),
dans laquelle la partie inférieure présente un premier raccord vissé (8), de sorte que la partie inférieure (6) puisse être fixée à sa bride supérieure (7) par le premier raccord vissé (8) à la peau extérieure de la cabine (2),
dans laquelle la protection de cabine présente une première entretoise (9) qui peut être disposée entre la partie inférieure (6) et la peau extérieure de la cabine (2), et
dans laquelle la partie inférieure (6) présente un deuxième raccord vissé (11), de sorte que la partie inférieure (6) puisse être fixée par sa bride inférieure (10), par l'intermédiaire du deuxième raccord vissé (11), à la peau extérieure de la cabine (2), dans laquelle la protection de cabine présente une deuxième entretoise (12) qui peut être disposée entre la bride inférieure (10) et la peau extérieure de la cabine (2),
dans laquelle les deux entretoises (9, 12) sont réalisées en un matériau élastique,
dans laquelle la partie supérieure (5) de la grille de protection avant (3) comporte une pluralité de rouleaux profilés (24) qui sont aptes à coopérer avec le guide (29) dans le toit de protection de cabine (4), et
dans laquelle la protection de cabine présente au moins un élément de connexion (40, 41), qui est apte à verrouiller la partie supérieure (5) de la grille de protection avant (3) à la partie inférieure (6) de la grille de protection avant (3), et
dans laquelle la protection de cabine présente un élément de centrage (35) qui est apte à centrer la partie supérieure (5) de la grille de protection avant (3) par rapport à la partie inférieure (6) de la grille de protection avant (3), dans lequel l'élément de centrage (35) présente une goupille (36) qui est reçue par l'intermédiaire d'un premier palier (37) dans la partie inférieure (6),
dans laquelle le premier palier (37) présente un élément de ressort, et comme autre partie de l'élément de centrage est disposée dans la partie supérieure (5) une goupille conique (38) et la goupille conique (38) est fixée par l'intermédiaire d'un deuxième palier (39) dans la partie supérieure (5),
dans laquelle la protection de cabine présente un dispositif de verrouillage (25, 34) qui est apte à verrouiller la partie supérieure (5) de la grille de protection avant (3) dans une position supérieure, et
dans laquelle la grille de protection avant (3) présente au moins une entretoise transversale (12), l'entretoise transversale (12) étant disposée selon un angle correspondant à une direction de vision du conducteur, et
dans laquelle la protection de cabine présente un entraînement pour pousser la partie supérieure (5) dans et hors de la grille de protection avant (3).
